# EUROPÄISCHE PATENTANMELDUNG

(11) **EP 0 747 625 A2**
(43) Veröffentlichungstag der Anmeldung: **11.12.1996**
(21) Anmeldenummer: 96107043.0
(22) Anmeldetag: 04.05.1996
(51) Int. Cl.: F17C 13/02

(54) **Verfahren und Vorrichtung zur Regelung des Behälterinnendruckes und/oder Einstellung definierter Strömungsverhältnisse von Gasströmen im Kopfraum von Behältern**

(30) Priorität: 10.06.1995 DE 19521297
(71) Anmelder: MESSER GRIESHEIM GMBH, D-60547 Frankfurt (DE)
(72) Erfinder: Herzog, Friedhelm, Dr., 47799 Krefeld (DE); Lürken, Franz, Dr., 47906 Kempen (DE)

(57) **Zusammenfassung**

Bei dem erfindungengemäßen Verfahren und der Vorrichtung kann ein sich aufbauender Druck im Kopfraum in Abhängigkeit der Menge des Zuflußmediums vermindert werden. Es ist auch möglich, definierte Strömungsverhältnisse im Kopfraumgas aufrechtzuerhalten bzw. herbeizuführen.

## Beschreibung

Die Erfindgung betrifft ein Verfahren zur Regelung des Behälterinnendruckes und/oder zur Einstellung definierter Strömungsverhältnisse von Gasströmen im Kopfraum von Behältern nach dem Oberbrgriff des Anspruchs 1, sowie eine zur Durchführhung des Verfahrens geeignete Vorrichtung.

Bei der Beaufschlagung von Behältern mit Gasen oder Flüssigkeiten muß oft aus konstruktiven oder verfahrenstechnischen Gründen dafür gesorgt werden, daß das Kopfraumgas aus diesen Behältern gezielt abgesaugt wird, damit der Behälterinnendruck nicht ansteigt. Dies ist beispielsweise dann der Fall, wenn den Behältern zur Inertisierung Gas zugeführt wird oder wenn sie befüllt werden. Das Erfordernis, Kopfraumgas gezielt abzuführen, tritt insbesondere dann auf, wenn das Kopfraumgas nicht direkt ins Freie geführt werden kann, sondern über druckverlustverursachende Rohrleitungs- oder Abgasreinigungssysteme geführt werden muß. Zur Überwindung des Druckverlustes entlang der Ausgangsleitung des Kopfraumgases ist dann ein Absauggebläse oder eine Absaugpumpe erforderlich. Die Steuerung dieser Aggregate erfolgt nach dem Stand der Technik durch Druckmessung im Kopfraum des Behälters und erfordert in der Regel einen erheblichen meß- und regeltechnischen Aufwand, da auch geringste Drucksteigerungen registriert werden müssen. Verwendet man zur Druckmessung die gängigen Druckmeßgeräte, so ist die Regelung des Druckes mit einer solchen Trägheit behaftet, daß insbesondere dann, wenn der Ausgang für das Kopfraumgas über längerere Leitungen vom Kopfraum getrennt ist, Drucksteigerungen auftreten, die verhindert werden sollten. Der Einsatz von empfindlicheren Druckmeßgeräten führt zu hohen Anschaffungskosten.

Der Erfindung liegt daher die Aufgabe zugrunde, ein Verfahren und eine Vorrichtung zu schaffen, mit denen die Empfindlichkeit der Druckregulierung auf kostengünstige Weise gesteigert und die Trägheit mit der die Druckentlastung erfolgt, vermindert werden kann.

Ausgehend von dem im Oberbegriff des Anspruchs 1 berücksichtigten Stand der Technik ist die Aufgabe erfindungsgemäß gelöst mit den im kennzeichnenden Teil des Anspruchs 1 angegebenen Merkmalen.

Mit dem erfindungegemäßen Verfahren und der Vorrichtung ist es nunmehr möglich, die Sicherheit von Behältern ohne aufwendige Meß- und Regeltechnik zu erhöhen.

Vorteilhafte Weiterbildungen der Erfindung sind in den Unteransprüchen angegeben.

In den Zeichnungen sind zwei Vorrichtungen für beispielhafte Anwendungen des erfindungsgemäßen Verfahrens in schematischer Form dargestellt.

Es zeigt:
- Fig.1:: Eine Vorrichtung für die Druckregulierung eines Behälters mit einer langen Austrittsleitung für das Kopfraumgas, für den Fall, daß das Zuflußmedium eine Flüssigkeit ist.
- Fig.2:: Eine Vorrichtung bei der das Zuflußmedium gasförmig ist.

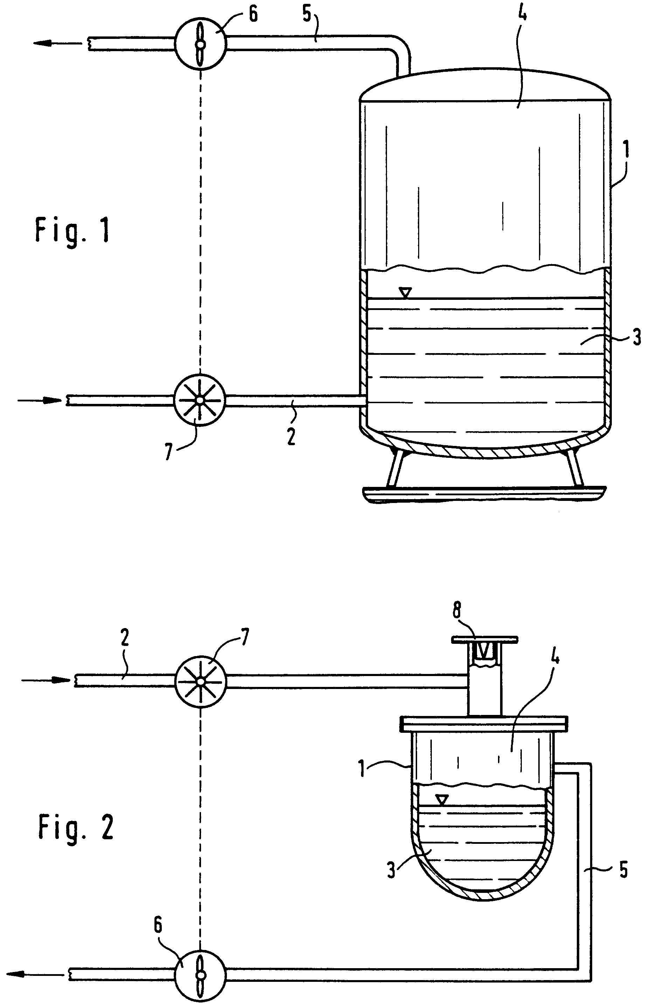

In Figur 1 ist ein Behälter 1 dargestellt, der über eine Eingangsleitung 2 mit einem Zuflußmedium in Form einer Flüssigkeit 3 beschickt wird und der im Kopfraum 4 eine Ausgangsleitung 5 für Kopfraumgas besitzt, welche mit einem Gebläse 6 ausgestattet ist. In die Eingangsleitung 2 ist eine Turbine 7 integriert, die das Gebläse 6 antreibt. Die gestrichelte Linie ohne Bezugszeichen stellt eine Kopplung dar, die das Gebläse 6 über die durch die Turbine 7 gewonnene Antriebskraft ansteuert beziehungsweise antreibt.

In Figur 2 sind den gleichen Vorrichtungsmerkmalen dieselben Bezugszeichen zugeordnet. In ihr ist der Behälter 1 mit einer Inertgasschleuse 8 ausgestattet, die durch die Eingangsleitung 2 mit einem Zuflußmedium in Form eines Inertgases beschickt wird.

Bei der Befüllung des in Figur 1 dargestellten Behälters 1 wird das flüssige Zuflußedium, beispielsweise Benzin, Lösemittel oder Wasser durch die Eingangsleitung 2 in den Behälter 1 eingebracht, wobei die Turbine 7 in Abhängigkeit von der Durchflußmenge angetrieben wird. Anstelle der Turbine 7 kann auch eine Drehkolbenmaschine oder jede andere Einrichtung treten, die geeignet ist, den Durchfluß zu bestimmen. Die in den Behälter 1 eintretende Menge an Flüssigkeit bewirkt durch ihr Eigenvolumen eine Verringerung des Kopfraumvolumens, welche zu einer Druckerhöhung im Kopfraum des Behälters 1 führt. Damit synchron zum Druckaufbau, der durch diesen Zufluß bedingt ist, eine Druckentlastung eingeleitet werden kann, wird die durch den Durchfluß der Flüssigkeit mit der Turbine 7 gewonnene Antriebskraft genutzt, um das Gebläse 6 in Betrieb zu setzen, welches das Kopfraumgas, das in dem Maße komprimiert wird, in dem der Flüssigkeitszufluß erfolgt, absaugt. Die Übertragung der Antriebskraft auf das Gebläse 6, das auch durch eine Ansaugpumpe oder andere Einrichtungen ersetzt werden kann, erfolgt durch eine Welle, die durch die gestrichelte Linie ohne Bezugszeichen dargestellt ist. An Stelle der Welle kann auch ein Getriebe oder eine sonstige elektronische, elektrische, pneumatische oder hydrauliche Kopplung eingesetzt werden. Die erfindungsgemäße Entlüftung des Behälterkopfraumes sorgt zum einen für das Konstanthalten des Druckes im Behälter, zum anderen erzeugt das Gebläse 6 den erforderlichen Druck zur Überwindung des Druckverlustes des nachgeschalteten Rohrleitungsysteme. Besonders vorteilhaft ist die Regulierung, wenn dem Behälter 1 Abgasreinigungsanlagen oder andere Vorrichtungsbestandteile nachgeschaltet sind, die ein selbständiges Entweichen des Kopfraumgases veroder behindern. Gleichzeitig kann der für den Betrieb von Abgasreinigungsanlagen erforderliche Betriebsdruck sichergestellt werden. Bei dem in Figur 2 dargestellten Beispiel wird über die Eintragsleitung 2, die mit einer Turbine 7 ausgestattet ist, ein gasförmiges Zuflußmedium in Form eines Inertgases in eine Inertgasschleuse eingetragen. Das Inertgas überschichtet dabei den Flüssigkeitsspiegel der vor Sauerstoffeinfall zu schützenden Flüssigkeit 3 und verläßt den Behälter 1 über die Ausgangsleitung 5, welche mit einem Gebläse 6 ausgestattet ist. Wird nun die Inertgasschleuse 8 geöffnet, so muß zum einen über die Eingangsleitung 2 Inertgas eingetragen werden, um etwaige Verluste an Inertgas und somit auftretende Gefahr zu verhindern und zum anderen müssen Turbulenzen unterbunden werden, die zur Einmischung von Sauerstoff in den Kopfraum des Behälters 1 führen können. Dies bedeutet, daß im Kopfraum des Behälters 1 kontrollierte Strömungsverhältnisse aufrechterhalten werden müssen. Erfindungsgemäß geschieht dies dadurch, daß die durch vom durchfließenden Inertgas angetriebene Turbine 7 das Gebläse 6 über eine mechanische Kopplung, in Form eines Getriebes, antreibt. Somit ist gewährleistet, daß sich im Kopfraum aufbauende Strömungen gerichtet verlaufen. Bei der auf diese Weise herbeigeführten definierten Strömung kann ein bestimmter Teil der Menge des zugeführten Gases zeitgleich mit der Zuströmung aus dem Behälter abgesaugt werden. Natürlich kann auch der gesamte Gasstrom in einer gerichteten Strömung geführt werden. In geschlossenen Behältern kann auch ein definierter Über - oder Unterdruck aufrechterhalten werden, indem eine Steuerung für das Gebläse durch Verstärkung oder Verminderung der Antriebsenergie erfolgt. Anstelle der Turbine 7 kann analog zur Vorrichtung in Figur 1 eine Drehkolbenmaschine treten. Genauso kommen anstelle des Gebläses 6 Pumpen als Fördermittel und anstelle der mechanischen Kopplung, in Form eines Getriebes, die in dem Beispiel von Figur 1 aufgezählten Mittel in Betracht. Mit dem erfindungsgemäßen Verfahren und der Vorrichtung kann der Druck in einem Behälter auf einfache Weise konstantgehalten, beziehungsweise Strömungsverhältnisse im Kopfraum des Behälters definiert aufrechterhalten bzw. gesteuert werden. Es wird gewährleistet, daß eine Absaugung von Kopfraumgas immer genau dann erfolgt, wenn ein Behälter mit einem Zuflußmedium beaufschlagt wird. Insbesondere entfällt die Trägheit mit der eine Regelung nach dem Stand der Technik durchgeführt werden muß.

## Patentansprüche

1. Verfahren zur Regelung des Behälterinnendruckes und/oder zur Einstellung definierter Strömungsverhältnisse von Gasströmungen im Kopfraum von Behältern, bei dem ein Zufluß eines flüssigen und/oder gasförmigen Zuflußmediums und eine Absaugung des Kopfraumgases erfolgt,
dadurch gekennzeichnet,
daß die Menge des gasförmigen und/oder flüssigen Zuflußmediums erfaßt wird und eine Absaugung des Kopfraumgases in Abhängigkeit der Menge des Zuflußmediums erfolgt.

2. Vorrichtung mit mindestens einem Behälter (1), mindestens einer Eingangsleitung (2) für das Zuflußmedium und mindestens einer Ausgangsleitung (5) für das Kopfraumgas umfassend folgende Bestandteile:
- Mittel zur Bestimmung der einströmenden Menge des Zuflußmediums,
- Mittel zum Austrag von Kopfraumgas,
- Mittel zur Ansteuerung des Mittels zum dosierten Austrag von Kopfraumgas, welche durch die zur Bestimmung der einströmenden Menge des Zuflußmediums eingesetzten Mittel betätigt werden.

3. Vorrichtung nach Anspruch 2,
dadurch gekennzeichnet,
daß das Mittel zur Bestimmung der einströmenden Menge des Zuflußmediums eine Turbine (7) ist.

4. Vorrichtung nach Anspruch 2 oder 3,
dadurch gekennzeichnet,
daß das Mittel zum Austrag von Kopfraumgas ein Gebläse (6) ist.

5. Vorrichtung nach einem der Ansprüche 2 bis 4,
dadurch gekennzeichnet,
daß das Mittel zur Ansteuerung des Mittels zum Austrag von Kopfraumgas ein Getriebe ist.

6. Vorrichtung nach einem der Ansprüche 2 bis 5,
dadurch gekennzeichnet,
daß dem Behälter (1) druckverlustverursachende Vorrichtungsbestandteile nachgeordnet sind.

7. Vorrichtung nach Anspruch 6,
dadurch gekennzeichnet,
daß der druckverlustverursachende Vorrichtungsbestandteil eine lange Ausgangsleitung (5) ist.
